# FASCICULE DE BREVET EUROPEEN

(11) **EP 0 714 179 B1**
(45) Date de publication et mention de la délivrance du brevet: **23.06.1999**
(21) Numéro de dépôt: 95402637.3
(22) Date de dépôt: 22.11.1995
(51) Int. Cl.: H04B 7/185

(54) **Charge utile de satellite à canaux transparents intégrés**
Benutzungslast für Satelliten mit transparentem integriertem Kanal
Payload for satellite with integrated transparent channel

(30) Priorité: 24.11.1994 FR 9414100
(43) Date de publication de la demande: 29.05.1996
(73) Titulaire: Alcatel, 75382 Paris Cédex 08 (FR)
(72) Inventeur: Floury, Gérard, F-31500 Toulouse (FR); Gazda, Jean-Philippe, F-31410 Le Fauga (FR); Rivierre, Bernard, F-31470 Fontenilles (FR); Tatard, Michel, c/o Alcatel Espace, F-31037 Toulouse Cedex (FR)
(74) Mandataire: Smith, Bradford Lee

(56) Documents cités:
- EP-A- 0 599 249
- EP-A- 0 608 815
- EP-A- 0 622 904
- GB-A- 2 268 377
- US-A- 4 002 980
- ANT NACHRICHTENTECHNISCHE BERICHTE, no. 7, Octobre 1990 BACKNANG,DE, pages 31-41, XP 000234665 H.GAUGIG ET AL. 'Das Repeater-Untersystem der Nutzlast des DFS Kopernikus.'
- ANT NACHRICHTENTECHNISCHE BERICHTE, no. 7, Octobre 1990 BACKNANG,DE, pages 23-30, XP 000234664 L. FRIEDERICHS 'Die Nutzlast des DFS-Kopernikus-Raumsegments'
- IEEE INTERNATIONAL CONFERENCE ON COMMUNICATIONS, vol. 1, Juin 1987 SEATTLE,US, pages 244-248, F.ANANASSO ET AL. 'On-Board Technologies for User-Oriented SS-FDMA Satellite Systems'
- IEEE GLOBECOM CONFERENCE, vol. 1, Décembre 1993 HOUSTON,US, pages 599-603, C.LOO ET AL. 'Double-Hop on Board Signal Processing using OLYMPUS'

## Description

Le domaine de l'invention est celui des satellites de télécommunications. Plus précisément, l'invention concerne les charges utiles embarquées, qui comprennent une pluralité de transpondeurs capables de recevoir et d'émettre des signaux hyperfréquence respectivement depuis et vers le globe terrestre.

La plupart des satellites de télécommunications actuels sont "transparents" pour l'utilisateur. Dans ce cas les ressources de la charge utile sont partagées en plusieurs canaux distincts qui peuvent être attribués à des utilisateurs au sol, soit à raison d'un canal par utilisateur au moins pendant la durée de son utilisation, soit un canal partagé entre plusieurs utilisateurs, par exemple selon une trame temporelle (AMRT ou accès multiple par répartition temporelle), ou selon un codage en transmissions à spectre étalé (AMRC ou accès multiple par répartition de codes).

Un canal est classiquement défini par une fréquence centrale et une largeur de bande autour de cette fréquence centrale. De façon générale, la fréquence d'émission est différente de la fréquence de réception pour un canal donné, donc il y a au moins une transposition de fréquence entre la réception des signaux depuis la terre, et l'émission de signaux vers la terre. Par exemple, pour un transpondeur en bande Ku, les liaisons montantes sont à des fréquences autour de 14 GHz (réception), et les liaisons descendantes sont à des fréquences autour de 12 GHz.

On constate qu'avec l'évolution du marché des télécommunications par satellite, prise parallèlement avec l'évolution de la technologie, les charges utiles comportent de plus en plus de transpondeurs, afin de satisfaire le plus grand nombre d'utilisateurs simultanément. D'autre part, l'utilisation du spectre radiofréquence étant soumise à la pression d'une demande toujours croissante, les charges utiles doivent être conçues de manière à pouvoir faire transiter le nombre maximal de canaux simultanément, et ce sur la quasi totalité de la bande de fréquences allouée par des instances intergouvernementales. Cette tendance a pour conséquence une augmentation du nombre nécessaire de transpositions de fréquences différentes à effectuer à bord du satellite pour remplir la mission.

Par exemple, pour pouvoir utiliser quatre sous-bandes de 250 MHz Emission-Réception sur les cinq sous-bandes allouées par l'UIT en bande Ku (chaque sous-bande pouvant servir trois canaux classiques de 72 MHz de largeur de bande), il faut prévoir six fréquences de transposition différentes au lieu des deux nécessaires dans une génération antérieure de charges utiles. Ces multiples changements de fréquence au sein d'un seul équipement peuvent donner lieu à une multiplicité de raies parasites de mélange, qui peuvent engendrer un taux d'intemodulation entre canaux inacceptable dans certains cas, et des canaux "bouchés" par l'interférence provenant d'une raie parasite dans d'autres cas.

De plus, selon une architecture classique, plusieurs canaux subissent une transposition de fréquence ensemble, utilisant le même signal d'oscillateur local et surtout le même mélangeur au sein d'un même convertisseur de fréquence. Or, les signaux présents sur les différents canaux qui sont transposés ensemble peuvent avoir des amplitudes relatives très différentes, jusqu'à 15 dB de différence, ce qui importe pour la suite quant à leur protection vis à vis des produits parasites de mélange mentionnés ci-dessus.

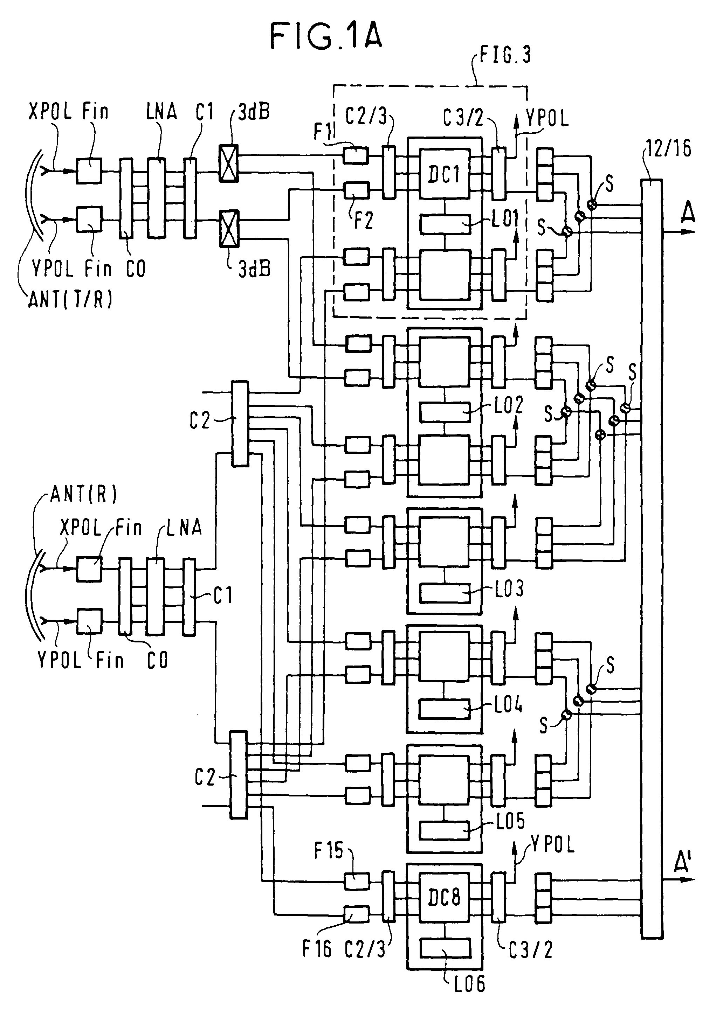

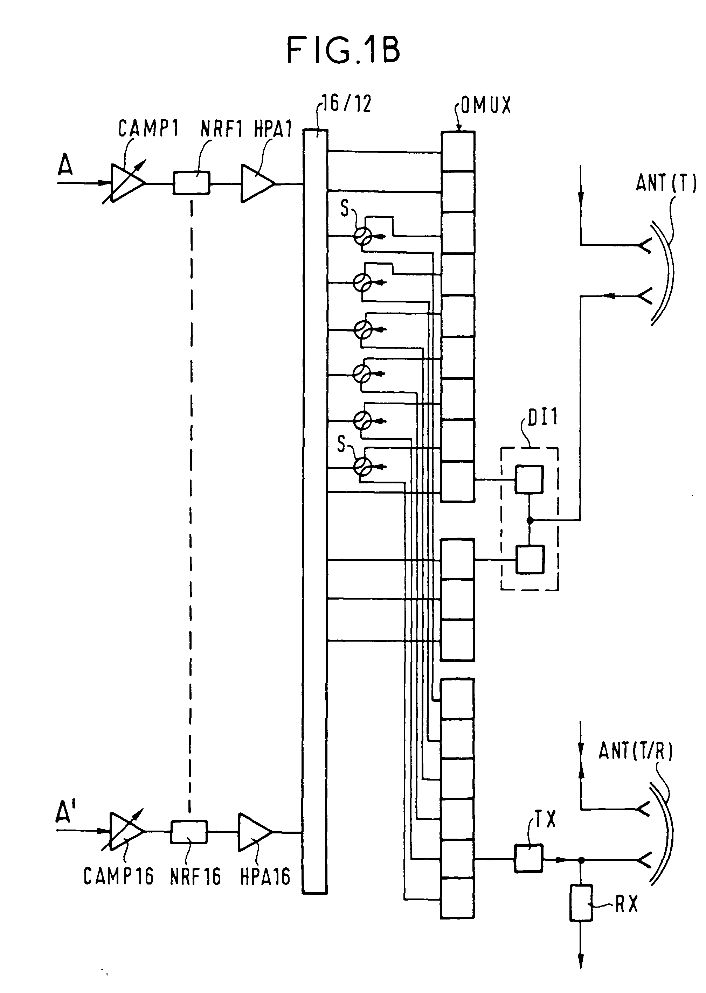

D'autre part, l'extrapolation d'une architecture de la génération précédente n'est pas satisfaisante parce que la masse, le poids, et la complexité de l'architecture classique deviennent prohibitifs , tel que l'on peut le constater sur les figures 1a et 1b.

Sur la figure 1a, on voit une première partie d'un exemple d'une architecture de conception classique d'une charge utile pour un nombre de canaux élevé (24 canaux dans l'exemple montré, dont 12 de chaque polarisation XPOL, YPOL). La figure montre les éléments de la charge utile pour une polarisation uniquement, des voies parallèles sont prévues pour la polarisation croisée à partir des blocs de conversion de fréquence DC1...DC8.

Un telle charge utile comprend, très grossièrement depuis la ou les antenne (s) de réception : un bloc d'amplification faible bruit (Fin, LNA) ; un bloc de 16 filtres de présélection (F1, F2, ...F15, F16) pour découper les signaux reçus en bandes de fréquence de 250 MHz de largeur de bande ; huit blocs ayant 3 convertisseurs chacun (DC1, ...DC8) pour un total de 24 convertisseurs de fréquences, associés en anneau de redondance de 3 pour 2 ; un deuxième bloc de 24 filtres de canal qui forment un bloc de multiplexage de réception (connu de l'homme de l'art sous l'acronyme IMUX pour Input Multiplexer en anglais) ; et un deuxième dispositif d'anneau de redondance de 16 pour 12.

Comme mentionné ci-dessus, la figure ne montre que les éléments de la charge utile nécessaire pour une polarisation uniquement (XPOL), des voies parallèles sont prévues pour la polarisation croisée YPOL à partir des blocs de conversion de fréquence DC1...DC8.

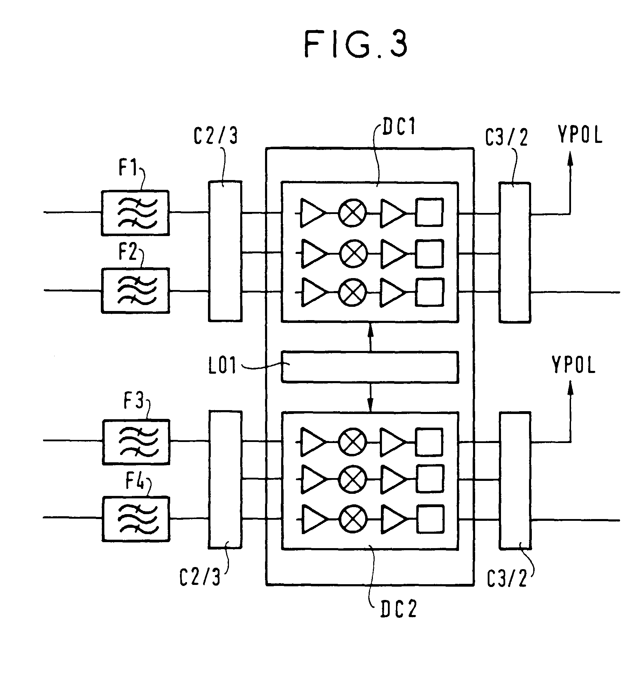

Il est à noter que les 8 blocs de convertisseurs de fréquence (DC1, ...DC8) sont chacun alimentés par un oscillateur local qui génère la fréquence de transposition. Ces convertisseurs de fréquence sont montrés plus en détail sur la figure 3 qui est un détail de la figure 1a. Chaque convertisseur (DC1, DC2) traite une bande de 250 MHz comprenant trois canaux contigus de 72 MHz de bande chacun. Ces canaux étant sélectionnés par le(s) filtre(s) de présélection (F1, F2, F3, F4,...) de 250 MHz de bande disposé(s) en amont du convertisseur. Dans l'exemple montré sur la figure 1a, il y a 6 fréquences différentes de transposition pour les huit blocs de convertisseurs, donc six oscillateurs locaux (LO1, LO2, ...LO6).

Sur la figure 3, on voit deux convertisseurs de fréquence (D1, D2) qui sont alimentés à partir d'un seul oscillateur local LO1. Sur la figure 1a, on voit que la même chose se produit pour les convertisseurs DC3, DC4 qui sont alimentés à partir d'un seul oscillateur local LO2. C'est parce qu'il y deux antennes de réception, ANT(R) et ANT (T/R), qui fournissent des signaux dans les mêmes sous-bandes de 250 MHz, et qui peuvent donc être transposés par la même fréquence de transposition. Sur la figure la, on voit que pour chaque sous-bande de 250 MHz, seulement l'une des deux antennes sera sélectionnée par des commutateurs S en aval des filtres du multiplexage d'entrée IMUX pour alimenter les amplificateurs de canal qui se trouvent sur la figure 1b.

Sur la figure 3 on voit également comment la redondance des convertisseurs de fréquence est assurée selon une architecture classique en prévoyant trois voies identiques de transposition de fréquence pour une sous-bande à traiter par chaque bloc de convertisseurs DC1, DC2,..., avec un anneau de redondance C2/3 à l'entrée et un anneau de redondance C3/2 à la sortie de chaque bloc convertisseur. L'une des sorties de chaque anneau de redondance C3/2 fournit un signal correspondant à la polarisation X dont le traitement est assuré par le schéma des figures 1a et 1b ; l'autre sortie correspond à la polarisation Y qui est assurée par un schéma équivalent mais non montré pour simplifier le dessin.

Tous ces éléments sont raccordés en séries de manière classique via des moyens de couplage et d'acheminement de signaux comprenant par exemple des anneaux de redondance (C0, C1, C2, C2/3, C3/2), des guides d'ondes (non référencés), des coupleurs 3dB, des commutateurs S, *et cetera,* afin de permettre aux signaux de transiter là où ils doivent transiter, et pour permettre une certaine robustesse de la charge utile face aux pannes intempestives d'un certain nombre d'éléments clés du système en prévoyant des redondances pour ces derniers, ainsi que des moyens de commutation ou de couplage permettant de les mettre en oeuvre si nécessaire.

La figure la s'arrête à l'anneau de redondance 12/16 et ses seize sorties. La figure est coupée à cet endroit selon les repères A-A', qui se raccordent aux mêmes repères de la figure 1b pour continuer la description de l'art antérieur avec la deuxième partie d'un exemple d'une architecture de conception classique d'une charge utile pour un nombre de canaux élevé.

Donc à partir du premier anneau de redondance 12/16 sur la figure la, nous avons seize amplificateurs de canaux à gain variable CAMP1, CAMP2, ... CAMP16 dont les sorties sont raccordées via des filtres de réduction de bruit NRF1, NRF2, ...NRF16, disposés en séries, aux entrées des amplificateurs de puissance respectifs HPA1, HPA2, ...HPA16. Les signaux de puissance issus de ces amplificateurs de puissance sont ensuite véhiculés via un deuxième anneau de redondance 16/12 vers 18 filtres de canaux OMUX. Dans l'exemple montré, six de ces filtres OMUX sont alimentés directement depuis six sorties de l'anneau de redondance 16/12 ; les douze autres filtres OMUX sont alimentés à partir des six autres sorties de l'anneau de redondance 16/12 via six commutateurs S qui permettent d'alimenter six filtres OMUX sur les douze. Les signaux sont ensuite acheminés vers la(les) antenne(s) d'émission ANT(T) ou d'émission/réception ANT(T/R), éventuellement via d'autres filtres passe-bande (DI1, TX, ...).

Le document D1 = ANT Navhrichtentechnische Berichte, no.7, Octobre 1990, Backnang, DE : pages 31-41, H. Gaugig et al., "Das Repeater-Untersystem der Nutzlast des DFS Kopernikus" décrit un autre architecture classique ayant les charactéristiques des figures 1 et 3 décrites ci-dessus.

Ces architectures classiques présentent plusieurs problèmes quand appliquée à une charge utile comportant un grand nombre de canaux et un grand nombre de transpositions de fréquence, dont nous en rappelons quelques-uns brièvement : une multiplicité de produits parasites de mélange ; un taux de diaphonie élevé ; des canaux bouchés par des parasites ; amplification d'une pluralité de canaux ayant des niveaux différents dans un seul mélangeur, ce qui veut dire que ce mélangeur ne peut être optimisé dans son point de fonctionnement que pour l'un des canaux, sauf compromis de performances. De plus, cette architecture n'est pas optimisée pour une réalisation selon une intégration poussée de ses différentes composantes fonctionnelles.

L'invention a pour but de pallier les inconvénients de l'art antérieur.

A ces fins, l'invention propose une architecture de charge utile pour satellite à **d** canaux transparents choisi parmi **c** canaux, c ≥ d à l'antenne, chaque canal ayant une largeur de bande δ, ladite charge utile comprenant une partie réception alimentée par au moins une antenne de réception et une partie émission alimentant au moins une antenne d'émission, ladite charge utile comprenant en outre une première pluralité **g** de filtres de canal passe-bande IMUX de largeur δ qui filtrent des signaux reçus par ladite partie réception ; des moyens de transposition de fréquence, une pluralité **k** d'amplificateurs de canal, *k* ≥ *d* ; des moyens d'amplification de puissance, et une deuxième pluralité **p** de filtres de canal OMUX qui filtrent les signaux amplifiés par ladite pluralité **k** d'amplificateurs de canal et lesdits moyens d'amplification de puissance, lesdits **k** amplificateurs de canal étant couplés auxdits **p** filtres de canal par des moyens de redondance afin d'affecter **d** amplificateurs auxdits **d** canaux ; lesdits moyens de transposition de fréquence comprenant au moins un mélangeur et au moins une source d'un signal de fréquence de transposition, **caractérisé en ce que** lesdits moyens de transposition de fréquence comprennent au moins un commutateur et au moins une source de signaux fournissant **q** signaux de **q** fréquences différentes de transposition, ledit commutateur étant couplé auxdite(s) source(s) et audit mélangeur, afin de sélectionner une fréquence de transposition parmi lesdites **q** fréquences et la fournir audit mélangeur et **en ce que** ledit au moins un mélangeur est un mélangeur large bande, capable de fonctionner correctement sur toute la bande d'allocation de ladite charge utile, c'est-à-dire sur une largeur de bande ≥ **d**δ.

Selon une autre réalisation avantageuse, lesdits **k** amplificateurs de canal à gain variable sont associés respectivement à **k** dispositifs de transposition de fréquence, chaque dispositif de transposition comprenant au moins un mélangeur et au moins une source d'un signal de fréquence de transposition ; les **d** sorties desdits **d** amplificateurs de canal étant couplées respectivement aux **d** entrées desdits dispositifs de transposition de fréquence.

Selon une autre variante, lesdits **k** dispositifs de transposition de fréquence comprennent au moins un premier et un deuxième mélangeurs et au moins deux sources de deux signaux de fréquence de transposition, de manière a effectuer au moins deux transpositions de fréquence pour chaque canal. Selon une réalisation avantageuse, lesdites au moins deux sources de fréquence sont des oscillateurs locaux corrélés. Selon une autre caractéristique, lesdits oscillateurs locaux corrélés sont des oscillateurs locaux à synthèse de fréquence permettent de fournir chacun un signal à une fréquence séléctionnée parmi une pluralité **c** de fréquences possibles, et lesdits oscillateurs locaux corrélés à synthèse de fréquence étant commandables depuis le sol par des signaux de télécommande (TC1,...TC16), ladite charge utile comprennant en outre des moyens pour recevoir un signal de commande depuis le sol, ainsi que des moyens pour appliquer ledit signal de commande au(x)dit(s) oscillateurs locaux corrélés, lesdits au moins deux oscillateurs locaux corrélés à synthèse de fréquence étant couplé(s) auxdite(s) source(s) et auxdits mélangeurs, afin de sélectionner une premiere et une deuxième fréquences de transposition parmi lesdites **c** fréquences et les fournir auxdits mélangeurs.

Dans une réalisation particulièrement avantageuse, un filtre à ondes acoustiques de surface (SAW1,.. SAW16) est disposé entre lesdits au moins deux mélangeurs et avant ledit amplificateur de canal à gain variable, de manière à effectuer le filtrage de canal par lesdits filtres SAW avant ladite deuxième mélangeur.

Selon une réalisation particulière, l'invention propose une charge utile pour satellite de télécommunications pouvant véhiculer un grand nombre **d** de canaux transparents, ladite charge utile étant apte à recevoir des signaux montants constitués par des ondes radioélectriques dans une première bande de fréquences ayant une première fréquence centrale et une première largeur de bande, et d'émettre des signaux descendants constitués par des ondes radioélectriques dans une deuxième bande de fréquences ayant une deuxième fréquence centrale et une deuxième largeur de bande, ladite deuxième fréquence centrale étant différente de ladite première fréquence centrale, ladite charge utile comportant :
au moins une antenne radioélectrique, ladite au moins une antenne étant apte à recevoir et/ou à émettre des ondes radioélectriques ;
   une pluralité **e** de filtres d'entrée,
   une pluralité **f** d'amplificateurs faible bruit,
   une pluralité **g** de filtres IMUX de démultiplexage,
   une pluralité **h** de convertisseurs de fréquences,
   une pluralité **j** d'oscillateurs locaux,
   une pluralité **k** d'amplificateurs de canal,
   une pluralité **m** de filtres de réduction de bruit,
   une pluralité **n** d'amplificateurs de puissance,
   une pluralité **p** de filtres OMUX, et
   des moyens de couplage et d'acheminement des signaux ;
les différents éléments énumérés ci-dessus étant disposés et raccordés par lesdits moyens de couplage et d'acheminement des signaux, de manière à effectuer un filtrage de canal sur lesdits signaux par lesdits **g** filtres IMUX avant d'effectuer une première transposition de fréquence desdits signaux moyennant lesdits **h** convertisseurs de fréquence, le nombre **h** de convertisseurs de fréquence étant au moins égal au nombre **d** de canaux : *h* ≥ *d*, **caractérisé en ce que** lesdits convertisseurs de fréquence comprennent au moins un commutateur et au moins une source de signaux fournissant **q** signaux de **q** fréquences différentes de transposition, ledit commutateur étant couplé auxdite(s) source(s) et audit mélangeur, afin de sélectionner une fréquence de transposition parmi lesdites **q** fréquences et la fournir audit convertisseur, et **caractérisé en ce que** lesdits convertisseurs de fréquence sont des convertisseurs large bande, pouvant convertir en fréquence n'importe quel canal, depuis n'importe quelle fréquence de canal dans ladite première bande de fréquences vers n'importe quelle fréquence de canal dans ladite deuxième bande de fréquences, moyennant l'application audit convertisseur d'une fréquence de transposition appropriée fournie par un desdits oscillateurs locaux sur commande appliquée audit commutateur associé audit oscillateur local.

Selon une réalisation préférée, chaque oscillateur local peut fournir une pluralité **q** de fréquences de transposition, dont une peut être sélectionnée à l'aide d'un commutateur associé audit chaque oscillateur local, ledit commutateur étant configurable sur commande.

Selon une réalisation avantageuse, ladite charge utile comprend en outre des moyens pour recevoir un signal de commande depuis le sol, ainsi que des moyens pour appliquer ledit signal de commande au(x)dit(s) commutateur(s) afin de commander la configuration de ce(s) dernier(s).

Selon une réalisation particulièrement avantageuse, lesdits **k** amplificateurs de canal sont physiquement associés audits **h** convertisseurs de fréquence, et **h = k**. Selon une réalisation préférée, lesdits **k** amplificateurs et lesdits **h = k** convertisseurs de fréquence sont réalisés en MMIC et sont intégrés au sein d'un dispositif amplificateur de canal / convertisseur de fréquence.

Selon une autre réalisation, lesdits **k** amplificateurs de canal sont des amplificateurs à gain contrôlable. Selon une caractéristique, lesdits **k** amplificateurs à gain contrôlable sont disposés et raccordés par lesdits moyens de couplage et d'acheminement des signaux, aux entrées desdits **h** convertisseurs de fréquence de manière à effectuer l'amplification de canal avant d'effectuer ladite première transposition de fréquence.

Selon un autre mode de réalisation, ladite charge utile comporte en outre des moyens de traitement numérique de signal, comprenant notamment une pluralité **r** de convertisseurs analogique numérique, des moyens de filtrage numérique, et une pluralité **r** de convertisseurs numérique analogique. Avantageusement, ces moyens de traitement numérique sont disposés et raccordés par lesdits moyens de couplage et d'acheminement de signal de manière à effectuer ledit traitement numérique après ladite première transposition de fréquence. Selon une variante, lesdits moyens de traitement numérique comprennent en outre des moyens de transposition en fréquence aptes à effectuer une deuxième transposition de fréquence avant la conversion numérique analogique par ladite pluralité **r** de convertisseurs numérique analogique.

Selon une réalisation particulière, lesdits **j** oscillateurs locaux sont des oscillateurs à synthèse de fréquence.

Selon une réalisation particulièrement avantageuse, les différents éléments sont mécaniquement intégrés par canal, chaque canal comportant au moins un linéariseur, un convertisseur de fréquence, un amplificateur de canal, et un amplificateur de puissance ainsi que l'alimentation de puissance électrique conditionnée nécessaire au bon fonctionnement de l'ensemble.

D'autres caractéristiques et avantages de l'invention apparaîtront à la lecture de la description détaillée qui suit, avec ses dessins annexés, dont :
- la figure 1a, déjà mentionnée, montre schématiquement une première partie d'une architecture de conception classique d'une charge utile pour un nombre de canaux élevé, qui se raccorde à la figure 1b selon les repères A-A' ;
- la figure 1b, déjà mentionnée, montre schématiquement une deuxième partie d'une architecture de conception classique d'une charge utile pour un nombre de canaux élevé , qui se raccorde à la figure 1a selon les repères A-A';
- la figure 2a montre schématiquement une première partie d'un exemple d'une architecture selon l'invention d'une charge utile pour un nombre de canaux élevé , qui se raccorde à la figure 2b selon les repères B-B';
- la figure 2b montre schématiquement une deuxième partie d'un exemple d'une architecture selon l'invention d'une charge utile pour un nombre de canaux élevé , qui se raccorde à la figure 2a selon les repères B-B';
- la figure 3, déjà décrite, montre schématiquement un détail de la figure 1a, comprenant un bloc de convertisseurs de fréquence selon l'art antérieur, avec ses oscillateurs locaux associés ;
- la figure 4, qui montre schématiquement et partiellement un autre exemple d'une réalisation selon l'invention, dans laquelle le filtrage du canal est effectué par un filtre à ondes acoustiques de surface disposé au sein des moyens de conversion de fréquence, comprennant des moyens pour effectuer deux transpositions de fréquence.

Sur toutes les figures, les mêmes repères désignent les mêmes éléments. L'échelle n'est pas toujours respectée pour des raisons de clarté de dessin. Les dessins représentent des exemples non limitatifs des réalisations selon l'invention pour en illustrer les principales caractéristiques.

Les figures 1a et 1b ont déjà été décrites en faisant référence aux principaux blocs fonctionnels d'une charge utile de conception classique.

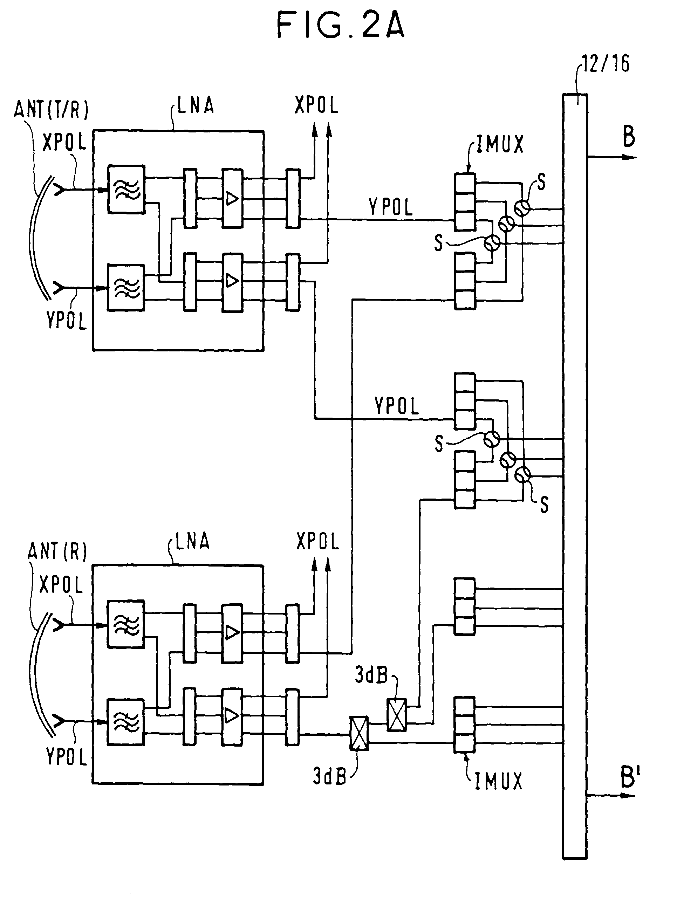

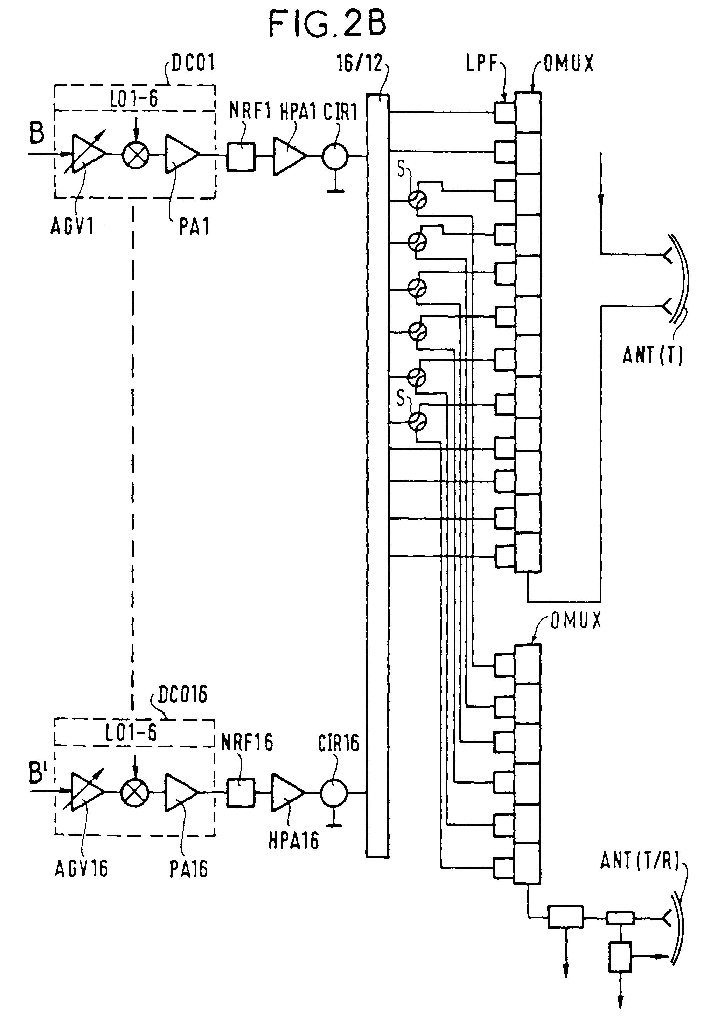

La figure 2a montre schématiquement une première partie d'un exemple d'une architecture selon l'invention d'une charge utile pour un nombre de canaux élevé , qui se raccorde à la figure 2b selon les repères B-B';

Comme dans la figure 1a, le nombre de canaux à véhiculer est de 24 dans l'exemple montré, (dont 12 de chaque polarisation XPOL, YPOL) pour permettre une comparaison directe avec la figure précédente. La charge utile de la figure 2a possède, tout comme celle de l'art antérieur, des antennes de réception et d'émission/réception, qui fournissent des signaux radioélectriques reçus aux blocs d'amplification faible bruit LNA comprenant des moyens de filtrage d'entrée, des anneau de redondances fournissant des voies redondantes, *et cetera*.

A partir des blocs d'amplification faible bruit LNA, les différences entre l'invention et l'art antérieur commencent à apparaître : Les signaux sont acheminés directement aux bancs de filtres de canal passe-bande IMUX. Comme dans la figure précédente, la figure 2a montre les éléments de la charge utile pour une polarisation uniquement (YPOL), des voies parallèles sont prévues pour la polarisation croisée XPOL, cette fois à partir des blocs d'amplification faible bruit LNA.

Les signaux d'entrée sont ainsi canalisés en canaux par les filtres de démultiplexage IMUX sans filtrage de présélection, et à la fréquence d'entrée avant toute conversion de fréquence. Le nombre de filtres IMUX correspond au nombre de canaux pour l'antenne de réception ANT(R), c'est-à-dire 12 pour chaque polarisation. Le nombre de filtre IMUX pour l'antenne émission/réception est de la moitié pour chaque polarisation, c'est-à-dire 6. Des commutateurs S permettent de sélectionner laquelle des deux antennes ANT(R), ANT(T/R) sera utilisée pour un canal qui peut être alimenté par les deux.

Après filtrage de multiplexage IMUX et sélection d'antenne par les commutateurs S, les signaux sont acheminés dans un anneau de redondance 12/16 comme dans l'art antérieur, et nous trouvons les repères B-B' qui serviront de raccords avec la figure 2b ou nous reprendrons la suite de la description.

La figure 2b montre schématiquement une deuxième partie d'un exemple d'une architecture selon l'invention d'une charge utile pour un nombre de canaux élevé , qui se raccorde à la figure 2a selon les repères B-B'. Les signaux arrivent depuis l'anneau de redondance 12/16 sur 16 voies, qui sont raccordées aux entrées de 16 dispositifs convertisseurs de fréquence DCO1, DCO2, ... DCO16. Selon une réalisation avantageuse de la charge utile de l'invention, ces dispositifs de conversion de fréquence sont intégrés, et peuvent être réalisés par exemple en technologie MMIC.

Chaque dispositif de conversion de fréquence (DCO1, ...DCO16) comprend ses propres moyens pour générer la fréquence de transposition, par exemple un oscillateur local (LO1-6). Chaque dispositif convertisseur de fréquence comprend un mélangeur qui permet de mélanger le signal à convertir en fréquence avec le signal provenant de l'oscillateur local pour effectuer la transposition de fréquence. Avantageusement, chaque dispositif de conversion de fréquence comprend également des moyens d'amplification, qui peuvent être, dans une réalisation préférée, intégrée avec les moyens de transposition de fréquence (mélangeur, oscillateur local). Avantageusement, ces moyens d'amplification constituent les amplificateurs de canal qui sont nécessaires pour fournir un signal pré-amplifié aux amplificateurs de puissance HPA1, HPA2, ... HPA16.

D'autre part, il est très avantageux de placer un amplificateur à gain contrôlé avant le mélangeur, au sein du dispositif convertisseur de fréquence intégré. De cette manière, on peut assurer que le niveau de signal appliqué au mélangeur sera toujours un peu près constant, ce qui permet de s'affranchir des problèmes engendrés par des niveaux de signaux disparates dans les différents canaux, et notamment les problèmes de bruit (parasites de mélanges). Sur la figure 2b, on voit un exemple de cette configuration préférée, avec l'amplificateur à gain contrôlé (AGV1, AGV2, ...AGV16) avant le mélangeur, lequel mélangeur est suivi par un préamplificateur PA1, PA2, .3.. PA16. Encore selon une réalisation préférée, ledit préamplificateur est aussi intégré avec l'amplificateur à gain contrôlé, le mélangeur, et l'oscillateur local pour faire un convertisseur de fréquence intégré.

Une dernière caractéristique avantageuse est proposée dans la figure 2b : il s'agit d'utiliser un oscillateur local capable de générer plusieurs fréquences distinctes, avec un commutateur pour en choisir une. Dans l'exemple de la figure 2b, il est prévue l'utilisation d'une source de fréquence capable de fournir un signal dans une bande très large, avec un commutateur pour choisir quelle fréquence de ladite bande sera effectivement utilisée pour les besoins du système. Ceci comporte au moins deux avantages décisifs : le dispositif de conversion de fréquence devient le même pour tous les canaux, (DCO1 = DCO2 = DCO3 =...= DCO16) d'où une importante simplification de la fabrication au niveau industriel ; et la reconfigurabilité du système au cours de sa vie utile. En effet, lesdits commutateurs configurables le sont sur l'application d'une commande externe de commutation. Il suffit de doter la charge utile des moyens spécifiques pour interpréter et ensuite agir sur des commandes envoyées depuis le sol, et la charge utile devient reconfigurable pour des missions alors inconnues à l'époque du lancement de l'engin.

La suite de la figure 2b ressemble à la partie correspondante de la figure 1b, conforme à une conception classique. A partir des convertisseurs de fréquence, les sorties de ces convertisseurs DOC1 DOC2, ...DCO16 sont raccordées via des filtres de réduction de bruit NRFR1, NRF2, ...NRF16, disposés en séries, aux entrées des amplificateurs de puissance respectifs HPA1, HPA2, ...HPA16. Les signaux de puissance issus de ces amplificateurs de puissance sont ensuite véhiculés via un deuxième anneau de redondance 16/12 vers 18 filtres de canaux OMUX. Dans l'exemple montré, six de ces filtres OMUX sont alimentés directement depuis six sorties de l'anneau de redondance 16/12 ; les douze autres filtres OMUX sont alimentés à partir des six autres sorties de l'anneau de redondance 16/12 via six commutateurs S qui permettent d'alimenter six filtres OMUX sur les douze. Les signaux sont ensuite acheminés vers la(les) antenne(s) d'émission ANT(T) ou d'émission/réception ANT(T/R), éventuellement via d'autres filtres passe-bande

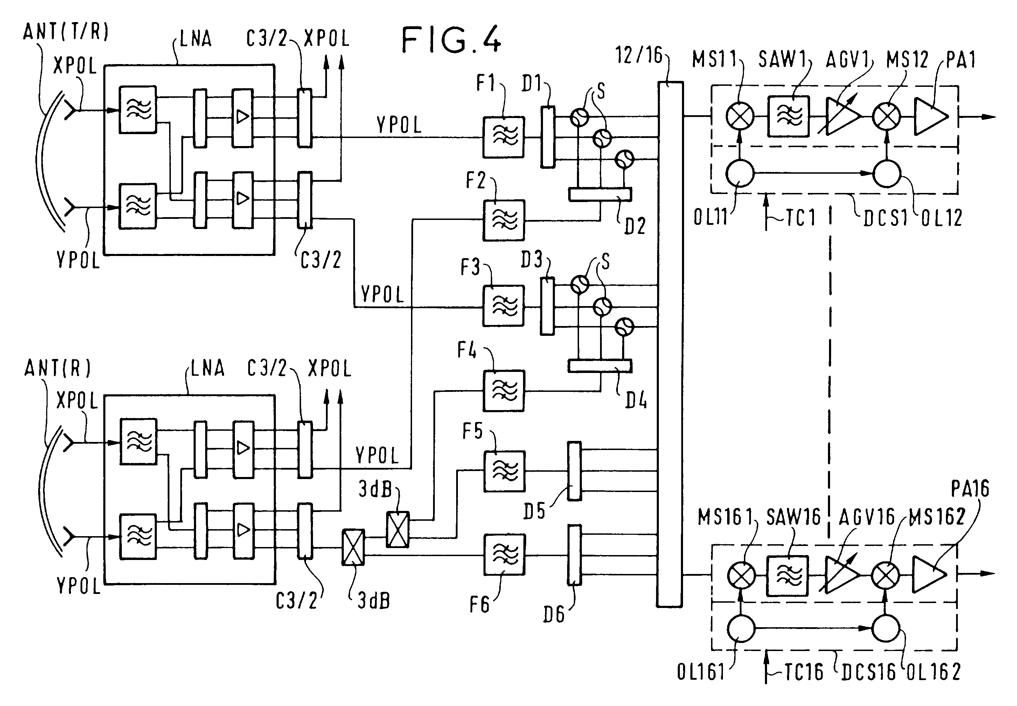

La figure 4 montre schématiquement et partiellement un autre exemple d'une réalisation selon l'invention, dans laquelle le filtrage du canal est effectué par un filtre à ondes acoustiques de surface (SAW1,...SAW16) disposé au sein des moyens de conversion de fréquence (DCS1, ... DCS16), comprennant des moyens pour effectuer deux transpositions de fréquence.

Comme dans les figures précédentes, le nombre de canaux à véhiculer est de 24 dans l'exemple montré, (dont 12 de chaque polarisation XPOL, YPOL) pour permettre une comparaison directe avec les figures précédentes. La charge utile de la figure 4 possède, tout comme celle de l'art antérieur, des antennes de réception et d'émission/réception, qui fournissent des signaux radioélectriques reçus aux blocs d'amplification faible bruit LNA comprenant des moyens de filtrage d'entrée, des anneau de redondances fournissant des voies redondantes, *et cetera.*

A partir des blocs d'amplification faible bruit LNA, l'exemple de la figure 4 comprend un bloc de filtres de présélection (F1, F2, ...F6) pour decouper les signaux reçus en bandes de fréquence de 250 MHz de largeur de bande. Les signaux ainsi filtrés sont ensuite fournis a des diviseurs de puissance (D1, D2, ...D6) qui sont raccordés par des matrices de commutateurs S à l'anneau de rédondance 12/16.

C'est ici que les différences entre cette réalisation selon l'invention et l'art antérieur commencent à apparaître : Les signaux sont acheminés directement aux moyens de conversion de fréquence (DCS1, ... DCS16) sans passer préalablement par des bancs de filtres de canal passe-bande IMUX. Comme dans les figures précédentes, la figure 4 montre les éléments de la charge utile pour une polarisation uniquement (YPOL), des voies parallèles sont prévues pour la polarisation croisée XPOL, cette fois à partir des blocs d'amplification faible bruit LNA.

Les signaux d'entrée sont ainsi canalisés en canaux par les filtres à ondes acoustiques de surface (SAW1, ... SAW16) qui sont au sein des moyens de conversion de fréquence, apres une première transposition de fréquence effectuée a l'aide d'un premier mélangeur (MS11, ... MS161) et d'un premier oscillateur local (OL11, ... OL161). Le nombre de filtres SAW correspond ainsi au nombre de canaux pour l'antenne de réception ANT(R), c'est-à-dire 12 pour chaque polarisation, augmenté par le nombre de voies de rédondance, c'est-à-dire 4 dans l'exemple montré. Comme dans la figure 2a, le nombre de filtre IMUX pour l'antenne émission/réception est de la moitié pour chaque polarisation, c'est-à-dire 6, augmenté par le nombre de voies de rédondance, c'est-à-dire 4 dans l'exemple montré. Il est a noter que les voies de rédondance peuvent etre affectées indifférémment à l'une ou à l'autre des antennes. Comme dans les figures précédentes, des commutateurs S permettent de sélectionner laquelle des deux antennes ANT(R), ANT(T/R) sera utilisée pour un canal qui peut être alimenté par les deux.

Après filtrage par les filtres SAW, les signaux sont acheminés, au sein des 16 dispositifs convertisseurs de fréquence DCS1, DCS2, ... DCS16.

Chaque dispositif de conversion de fréquence (DCS1, ...DCS16) comprend ses propres moyens pour générer deux fréquences de transposition, par exemple deux oscillateurs locaux (OL11, OL12,...OL161, OL162). Chaque dispositif convertisseur de fréquence selon la figure 4 comprend deux mélangeurs qui permettent de mélanger le signal à convertir en fréquence avec le signal provenant de l'oscillateur local respectif pour effectuer la transposition de fréquence. Avantageusement, chaque dispositif de conversion de fréquence comprend également des moyens d'amplification, qui peuvent être, dans une réalisation préférée, intégrée avec les moyens d'une deuxième transposition de fréquence (mélangeur, oscillateur local) au sein de chaque dispositif de convertisseur de fréquence (DCS1, ... DCS16). Avantageusement, ces moyens d'amplification constituent les amplificateurs de canal qui sont nécessaires pour fournir un signal pré-amplifié aux amplificateurs de puissance (HPA1, HPA2, ... HPA16, non-montrés sur cette figure).

D'autre part, comme déjà indiqué lors de la description de la figure 2b, il est très avantageux de placer un amplificateur à gain contrôlé (AGV1, ... AGV16) avant le deuxième mélangeur (MS12, ... MS162), au sein du dispositif convertisseur de fréquence. De cette manière, on peut assurer que le niveau de signal appliqué au deuxième mélangeur sera toujours un peu près constant, ce qui permet de s'affranchir des problèmes engendrés par des niveaux de signaux disparates dans les différents canaux, et notamment les problèmes de bruit (parasites de mélanges). Sur la figure 4, on voit un exemple de cette configuration préférée, avec l'amplificateur à gain contrôlé (AGV1, AGV2, ...AGV16) avant le deuxième mélangeur, lequel mélangeur est suivi par un préamplificateur PA1, PA2, .3.. PA16. Encore selon une réalisation préférée, ledit préamplificateur est aussi intégré avec l'amplificateur à gain contrôlé, le deuxième mélangeur, et le deuxième oscillateur local pour faire un convertisseur de fréquence intégré.

Une dernière caractéristique avantageuse est proposée dans la figure 4 : il s'agit d'utiliser deux oscillateurs locaux corrélés à synthèse de fréquence, capable de générer plusieurs fréquences distinctes, commandables par une télécommande depuis le sol qui est appliquée à l'entrée de commande (TC1, ... TC16) prevue à cet effet pour en choisir deux pour la première et la deuxième trasposition de fréquence. Dans l'exemple de la figure 4, il est prévue l'utilisation d'une source de fréquence capable de fournir un signal dans une bande très large, avec la possiblité de choisir quelle fréquence de ladite bande sera effectivement utilisée pour les besoins du système, parmi une douzaine de fréquences possibles, par exemple. Comme dans la réalisation de la figure 2b, ceci comporte au moins deux avantages décisifs : le dispositif de conversion de fréquence devient le même pour tous les canaux, (DCS1 = DCS2 = DCS3 =...= DCS16) d'où une importante simplification de la fabrication au niveau industriel ; et la reconfigurabilité du système au cours de sa vie utile. En effet, lesdits oscillateurs à synthèse de fréquence sont configurables par l'application d'une commande externe. Il suffit de doter la charge utile des moyens spécifiques pour interpréter et ensuite agir sur des commandes envoyées depuis le sol, et la charge utile devient reconfigurable pour des missions alors inconnues à l'époque du lancement de l'engin.

La suite de la charge utile de la figure 4 ressemble à la partie correspondante des figures 1b et 2b, conforme à une conception classique, et n'est pas porté sur le dessin. La description de cette partie commune ne sera donc pas repetée.

Bien que cela ne soit pas montré sur l'exemple de la figure 4, et tout comme l'exemple des figures 2a et 2b, il est bien sûr possible de remplacer plusieurs éléments de la conception de charge utile selon l'invention avec leurs équivalents fonctionnels dérivés de l'électronique numérique. Par exemple, on peut facilement imaginer remplacer les oscillateurs locaux et commutateurs associés avec des synthétiseurs de fréquence.

Les opérations de filtrage peuvent être effectués en numérique également, à condition d'effectuer au préalable une conversion analogique-numérique. D'autres traitements de signaux numériques peuvent être envisagés sans sortir autant du cadre de la présente invention.

On constate à la comparaison des figures 1b et 2b des avantages importants au niveau des réductions de la complexité, le poids et l'encombrement de la charge utile de l'invention par rapport à une conception classique de charge utile. En faisant le filtrage IMUX avant la première conversion de fréquence, on économise déjà les filtres de présélection. Ensuite, on a également fait économie des IMUX pour les canaux qui ne sont pas sélectionnés au niveau des commutateurs en amont du premier anneau de redondance 12/16. Les anneaux de redondance C2/3 et C3/2 de l'art antérieur ne sont pas repris dans la charge utile selon l'invention. L'intégration des convertisseurs de fréquence avec leurs oscillateurs locaux, leurs amplificateurs de canal à gain contrôlé, et leurs préamplificateurs de sortie permet une compacité et une fiabilité accrues. Dans une réalisation où les oscillateurs locaux sont identiques, avec une sélection de fréquence par un commutateur associé, tous les convertisseurs de fréquence intégrés deviennent identiques, ce qui simplifie leur fabrication industrielle.

D'autre part, les performances de l'ensemble sont améliorées parce que les convertisseurs de fréquence travaillent sur un canal unique au lieu de trois canaux contigus. Les raies parasites de mélange sont considérablement réduites sinon éliminées, et l'égalisation de niveau de signal dans chaque canal avant la transposition de fréquence de chaque canal individuellement améliore les performances des mélangeurs.

Une estimation du poids et de puissance électrique consommée pour les deux configurations des figures 1a, 1b contre 2a, 2b fait apparaître des économies importantes de masse d'alimentation : uniquement pour les convertisseurs de fréquence, les amplificateurs de canal, les filtres IMUX et les commutateurs de redondance associés, la masse de la solution classique est estimée à 28 kg, avec une consommation de 176 W. La solution selon l'invention telle que montrée sur les figures 2a, 2b présente une masse de 16 kg, avec une consommation de 120 W.

D'autres variantes de la charge utile selon l'invention seront facilement imaginables par l'homme de l'art, en remplaçant l'un ou l'autre des éléments avec des éléments semblables, sans sortir pour autant du cadre de l'invention, dont l'étendue est définie par les revendications ci-après.

## Revendications

1. Charge utile pour satellite à **d** canaux transparents choisi parmi **c** canaux, c ≥ d à l'antenne, chaque canal ayant une largeur de bande δ, ladite charge utile comprenant une partie réception alimentée par au moins une antenne de réception et une partie émission alimentant au moins une antenne d'émission, ladite charge utile comprenant en outre une première pluralité **g** de filtres de canal passe-bande IMUX de largeur δ qui filtrent des signaux reçus par ladite partie réception ; des moyens de transposition de fréquence, une pluralité **k** d'amplificateurs de canal, *k* ≥ *d* ; des moyens d'amplification de puissance, et une deuxième pluralité **p** de filtres de canal OMUX qui filtrent les signaux amplifiés par ladite pluralité **k** d'amplificateurs de canal et lesdits moyens d'amplification de puissance, lesdits **k** amplificateurs de canal étant couplés auxdits **p** filtres de canal par des moyens de redondance afin d'affecter **d** amplificateurs auxdits **d** canaux ; lesdits moyens de transposition de fréquence comprenant au moins un mélangeur et au moins une source d'un signal de fréquence de transposition, **caractérisé en ce que** lesdits moyens de transposition de fréquence comprennent au moins un commutateur et au moins une source de signaux fournissant **q** signaux de **q** fréquences différentes de transposition, ledit commutateur étant couplé auxdite(s) source(s) et audit mélangeur, afin de sélectionner une fréquence de transposition parmi lesdites **q** fréquences et la fournir audit mélangeur **et en ce que** ledit au moins un mélangeur est un mélangeur large bande, capable de fonctionner correctement sur toute la bande d'allocation de ladite charge utile, c'est-à-dire sur une largeur de bande ≥ **d**δ.

2. Charge utile pour satellite à **d** canaux transparents selon la revendication 1, **caractérisé en ce que** lesdits **k** amplificateurs de canal à gain variable sont associés respectivement à **k** dispositifs de transposition de fréquence, chaque dispositif de transposition comprenant au moins un mélangeur et au moins une source d'un signal de fréquence de transposition ; les **d** sorties desdits **d** amplificateurs de canal étant couplées respectivement aux **d** entrées desdits dispositifs de transposition de fréquence.

3. Charge utile pour satellite à **d** canaux transparents selon la revendication 2, **caractérisé en ce que** lesdits **k** dispositifs de transposition de fréquence comprennent au moins un premier et un deuxième mélangeurs et au moins deux sources de deux signaux de fréquence de transposition, de manière à effectuer au moins deux transpositions de fréquence pour chaque canal.

4. Charge utile pour satellite à **d** canaux transparents selon la revendication 3, **caractérisé en ce que** lesdites au moins deux sources de fréquence sont des oscillateurs locaux corrélés.

5. Charge utile pour satellite à **d** canaux transparents selon la revendication 4, **caractérisé en ce que** lesdits oscillateurs locaux corrélés sont des oscillateurs à synthèse de fréquence.

6. Charge utile pour satellite à **d** canaux transparents selon la revendication 5, **caractérisé en ce que** lesdits oscillateurs locaux corrélés à synthèse de fréquence permettent de fournir chacun un signal à une fréquence séléctionnée parmi une pluralité **c** de fréquences possibles, et lesdits oscillateurs locaux corrélés à synthèse de fréquence étant commandables depuis le sol par des signaux de télécommande (TC1,...TC16), ladite charge utile comprennant en outre des moyens pour recevoir un signal de commande depuis le sol, ainsi que des moyens pour appliquer ledit signal de commande au(x)dit(s) oscillateurs locaux corrélés, lesdits au moins deux oscillateurs locaux corrélés à synthèse de fréquence étant couplé(s) auxdite(s) source(s) et auxdits mélangeurs, afin de sélectionner une premiere et une deuxième fréquences de transposition parmi lesdites **c** fréquences et les fournir auxdits mélangeurs.

7. Charge utile pour satellite à **d** canaux transparents selon l'une quelconque des revendications 3 à 6, **caractérisé en ce que** un filtre à ondes acoustiques de surface (SAW1,... SAW16) est disposé entre lesdits au moins deux mélangeurs et avant ledit amplificateur de canal à gain variable, de manière à effectuer le filtrage de canal par lesdits filtres SAW avant ladite deuxième mélangeur.

8. Charge utile pour satellite de télécommunications pouvant véhiculer un grand nombre **d** de canaux transparents, ladite charge utile étant apte à recevoir des signaux montants constitués par des ondes radioélectriques dans une première bande de fréquences ayant une première fréquence centrale et une première largeur de bande, et d'émettre des signaux descendants constitués par des ondes radioélectriques dans une deuxième bande de fréquences ayant une deuxième fréquence centrale et une deuxième largeur de bande, ladite deuxième fréquence centrale étant différente de ladite première fréquence centrale ;
ladite charge utile comportant :
au moins une antenne radioélectrique, ladite au moins une antenne étant apte à recevoir et/ou à émettre des ondes radioélectriques ;
une pluralité **e** de filtres d'entrée,
une pluralité **f** d'amplificateurs faible bruit,
une pluralité **g** de filtres IMUX de démultiplexage,
une pluralité **h** de convertisseurs de fréquences,
une pluralité **j** d'oscillateurs locaux,
une pluralité **k** d'amplificateurs de canal,
une pluralité **m** de filtres de réduction de bruit,
une pluralité **n** d'amplificateurs de puissance,
une pluralité **p** de filtres OMUX, et
des moyens de couplage et d'acheminement des signaux ;
les différents éléments énumérés ci-dessus étant disposés et raccordés par lesdits moyens de couplage et d'acheminement des signaux, de manière à effectuer un filtrage de canal sur lesdits signaux par lesdits **g** filtres IMUX avant d'effectuer une première transposition de fréquence desdits signaux moyennant lesdits **h** convertisseurs de fréquence, le nombre **h** de convertisseurs de fréquence étant au moins égal au nombre **d** de canaux : *h ≥ d*, **caractérisé en ce que** lesdits convertisseurs de fréquence comprennent au moins un commutateur et au moins une source de signaux fournissant **q** signaux de **q** fréquences différentes de transposition, ledit commutateur étant couplé auxdite(s) source(s) et audit mélangeur, afin de sélectionner une fréquence de transposition parmi lesdites **q** fréquences et la fournir audit convertisseur, et **caractérisé en ce que** lesdits convertisseurs de fréquence sont des convertisseurs large bande, pouvant convertir en fréquence n'importe quel canal, depuis n'importe quelle fréquence de canal dans ladite première bande de fréquences vers n'importe quelle fréquence de canal dans ladite deuxième bande de fréquences, moyennant l'application audit convertisseur d'une fréquence de transposition appropriée fournie par un desdits oscillateurs locaux sur commande appliquée audit commutateur associé audit oscillateur local.

9. Charge utile pour satellite de télécommunications pouvant véhiculer un grand nombre **d** de canaux transparents, selon l'une quelconque des revendications 1 à 2, 7 ou 8, **caractérisé en ce que** chaque oscillateur local peut fournir une pluralité **q** de fréquences de transposition, dont une peut être sélectionnée à l'aide d'un commutateur associé audit chaque oscillateur local, ledit commutateur étant configurable sur commande.

10. Charge utile pour satellite à **d** canaux transparents selon l'une quelconque des revendications 1 à 2, 7 à 9, **caractérisé en ce que** ladite charge utile comprend en outre des moyens pour recevoir un signal de commande depuis le sol, ainsi que des moyens pour appliquer ledit signal de commande au(x) dit(s) commutateur(s) afin de commander la configuration de ce(s) dernier(s).

11. Charge utile pour satellite à **d** canaux transparents selon l'une quelconque des revendications 1 à 10, **caractérisé en ce que** lesdits **k** amplificateurs de canal sont physiquement associés auxdits **h** convertisseurs de fréquence, et **h = k**.

12. Charge utile pour satellite à **d** canaux transparents selon la revendication 11, **caractérisé en ce que** lesdits **k** amplificateurs et lesdits **h = k** convertisseurs de fréquence sont réalisés en MMIC et sont intégrés au sein d'un dispositif amplificateur de canal / convertisseur de fréquence.

13. Charge utile pour satellite à **d** canaux transparents selon l'une quelconque des revendications 1 à 12, **caractérisé en ce que** lesdits **k** amplificateurs de canal sont des amplificateurs à gain contrôlable.

14. Charge utile pour satellite à **d** canaux transparents selon la revendication 13, **caractérisé en ce que** lesdits **k** amplificateurs à gain contrôlable sont disposés et raccordés par lesdits moyens de couplage et d'acheminement des signaux, aux entrées desdits **h** convertisseurs de fréquence de manière à effectuer l'amplification de canal avant d'effectuer ladite première transposition de fréquence.

15. Charge utile pour satellite à **d** canaux transparents selon l'une quelconque des revendications 1 à 16, **caractérisé en ce que** ladite charge utile comporte en outre des moyens de traitement numérique de signal, comprenant notamment une pluralité **r** de convertisseurs analogique numérique, des moyens de filtrage numérique, et une pluralité **r** de convertisseurs numérique analogique.

16. Charge utile pour satellite à **d** canaux transparents selon la revendication 15, **caractérisé en ce que** lesdits moyens de traitement numérique sont disposés et raccordés par lesdits moyens de couplage et d'acheminement de signal de manière à effectuer ledit traitement numérique après ladite première transposition de fréquence.

17. Charge utile pour satellite à **d** canaux transparents selon l'une quelconque des revendications 1 à 16, **caractérisé en ce que** lesdits moyens de traitement numérique comprennent en outre des moyens de transposition en fréquence aptes à effectuer une deuxième transposition de fréquence avant la conversion numérique analogique par ladite pluralité **r** de convertisseurs numérique analogique.

18. Charge utile pour satellite à **d** canaux transparents selon l'une quelconque des revendications 1 à 17, **caractérisé en ce que** lesdits **j** oscillateurs locaux sont des oscillateurs à synthèse de fréquence.

19. Charge utile pour satellite à **d** canaux transparents selon l'une quelconque des revendications 1 à 18, **caractérisé en ce que** les différents éléments sont mécaniquement intégrés par canal, chaque canal comportant au moins un linéariseur, un convertisseur de fréquence, un amplificateur de canal, et un amplificateur de puissance ainsi que l'alimentation de puissance électrique conditionnée nécessaire au bon fonctionnement de l'ensemble.

## Claims

1. Satellite payload with **d** transparent channels chosen from **c** channels (c ≥ d at the antenna) each channel having a bandwidth δ, said payload comprising a receive part fed by at least one receive antenna and a transmit part feeding at least one transmit antenna, said payload further comprising a first plurality **g** of band-pass channel filters IMUX of bandwidth δ that filter signals receive by said receive part, frequency converter means, a plurality **k** of channel amplifiers (k ≥ d), power amplifier means and a second plurality **p** of channel filters OMUX that filter the signals amplified by said plurality **k** of channel amplifiers and said power amplifier means, said **k** channel amplifiers being coupled to said **p** channel filters by redundant means in order to assign **d** amplifiers to said **d** channels, said frequency converter means comprising at least one mixer and at least one source of a conversion frequency signal, characterized in that said frequency converter means comprise at least one switch and at least one signal source supplying **q** signals at **q** different conversion frequencies, said switch being coupled to said source(s) and to said mixer in order to select a conversion frequency from said **q** frequencies and to supply it to said mixer and in that said at least one mixer is a wideband mixer capable of operating correctly over all of the bandwidths of said payload, i.e. over a bandwidth ≥ **d**δ.

2. Satellite payload with **d** transparent channels according to claim 1 characterized in that said **k** variable gain channel amplifiers are respectively associated with **k** frequency converter devices, each converter device comprising at least one mixer and at least one conversion frequency signal source; the **d** outputs of said **d** channel amplifiers being respectively coupled to the **d** inputs of said frequency converter devices.

3. Satellite payload with **d** transparent channels according to claim 2 characterized in that said **k** frequency converter devices comprise at least first and second mixers and at least two sources of two frequency conversion signals, in such manner as to effect at least two frequency conversions for each channel.

4. Satellite payload with **d** transparent channels according to claim 3 characterized in that said at least two frequency sources are correlated local oscillators.

5. Satellite payload with **d** transparent channels according to claim 4 characterized in that said correlated local oscillators are frequency synthesizer oscillators.

6. Satellite payload with **d** transparent channels according to claim 5 characterized in that said correlated frequency synthesizer local oscillators are each adapted to supply a signal at a frequency selected from a plurality **c** of possible frequencies, and said correlated frequency synthesizer local oscillators being adapted to be controlled from the ground by telecontrol signals (TC1,..., TC16), said payload further comprising means for receiving a control signal from the ground and means for applying said control signal to said correlated local oscillators, said at least two correlated frequency synthesizer local oscillators being coupled to said source(s) and to said mixers in order to select first and second conversion frequencies from said **c** frequencies and to supply them to said mixers.

7. Satellite payload with **d** transparent channels according to any one of claims 3 to 6 characterized in that a surface acoustic wave filter (SAW1,..., SAW16) is disposed between said at least two mixers and before said variable gain channel amplifier in order to apply channel filtering by said SAW filters before said second mixer.

8. Telecommunication satellite payload adapted to convey a large number **d** of transparent channels, said payload being adapted to receive uplink signals consisting of radio waves in a first frequency band having a first center frequency and a first bandwidth and to transmit downlink signals consisting in radio waves in a second frequency band having a second center frequency and a second bandwidth, said second center frequency being different from said first center frequency;
said payload including:
at least one radio antenna adapted to receive and/or to transmit radio waves;
a plurality **e** of input filters,
a plurality **f** of low-noise amplifiers,
a plurality **g** of demultiplexing filters IMUX,
a plurality **h** of frequency converters,
a plurality **j** of local oscillators,
a plurality **k** of channel amplifiers,
a plurality **m** of noise reduction filters,
a plurality **n** of power amplifiers,
a plurality **p** of filters OMUX, and
coupling and signal routing means;
the various components listed above being disposed and connected by said coupling and signal routing means in such manner as to effect channel filtering of said signals by said **g** filters IMUX before first frequency conversion of said signals by said **h** frequency converters, characterized in that the number **h** of frequency converters is at least equal to the number **d** of channels: h ≥ d, characterized in that said frequency converters comprise at least one switch and at least one signal source supplying **q** signals with **q** different conversion frequencies, said switch being coupled to said source(s) and to said mixer in order to select one conversion frequency from said **q** frequencies and to supply it to said converter and characterized in that said frequency converters are wideband converters able to convert the frequency of any channel from any channel frequency in said first band of frequencies to any channel frequency in said second band of frequencies, subject to application to said converter of an appropriate conversion frequency supplied by one of said oscillators on command applied to said switch associated with said local oscillator.

9. Telecommunication satellite payload able to convey a large number **d** of transparent channels according to any one of claims 1, 2, 7 or 8, characterized in that each local oscillator can supply a plurality **q** of conversion frequencies one of which can be selected by a switch associated with each local oscillator, said switch being configurable on command.

10. Satellite payload with **d** transparent channels according to any one of claims 1, 2, 7 to 9, characterized in that said payload further comprises means for receiving a control signal from the ground and means for applying said control signal to said switch(es) in order to command the configuration of the latter.

11. Satellite payload with **d** transparent channels according to any one of claims 1 to 10 characterized in that said **k** channel amplifiers are physically associated with said **h** frequency converters and h = k.

12. Satellite payload with **d** transparent channels according to claim 11 characterized in that said **k** amplifiers and said h = k frequency converters are MMIC and are integrated into a channel amplifier/frequency converter device.

13. Satellite payload with **d** transparent channels according to any one of claims 1 to 12 characterized in that said **k** channel amplifiers are variable gain amplifiers.

14. Satellite payload with **d** transparent channels according to claim 13 characterized in that said **k** variable gain amplifiers are disposed and connected by said coupling and signal routing means to the inputs of said **h** frequency converters in such manner as to effect the channel amplification before effecting said frequency conversion.

15. Satellite payload with **d** transparent channels according to any one of claims 1 to 16 characterized in that said payload further includes digital signal processing means including a plurality **r** of analog-digital converters, digital filter means and a plurality **r** of digital-analog converters.

16. Satellite payload with **d** transparent channels according to claim 15 characterized in that said digital processing means are disposed and connected by said coupling and signal routing means in such manner as to effect said digital processing after said first frequency conversion.

17. Satellite payload with **d** transparent channels according to any one of claims 1 to 16 characterized in that said digital processing means further comprise frequency converter means adapted to effect a second frequency conversion before the digital-analog conversion by said plurality **r** of digital-analog converters.

18. Satellite payload with **d** transparent channels according to any one of claims 1 to 17 characterized in that said **j** local oscillators are frequency synthesizer oscillators.

19. Satellite payload with **d** transparent channels according to any one of claims 1 to 18 characterized in that the various components are mechanically integrated channel by channel, each channel including at least one linearizer, one frequency converter, one channel amplifier and one power amplifier together with the conditioned electrical power supply necessary for correct functioning of the system as a whole.

## Patentansprüche

1. Nutzlast für einen Satelliten mit **d** transparenten Kanälen, die unter **c** Kanälen ausgewählt sind, wobei c ≥ d an der Antenne, wobei jeder Kanal eine Bandbreite δ hat, wobei die Nutzlast einen Empfangsbereich, der durch mindestens eine Empfangsantenne versorgt ist und einen Sendebereich, der mindestens eine Sendeantenne versorgt, umfasst, wobei die Nutzlast außerdem eine erste Mehrzahl **g** von Bandpass-Kanalfiltern IMUX der Breite δ, die durch diesen Empfangsbereich empfangene Signale filtern; Frequenzumsetzungsmittel, eine Mehrzahl **k** von Kanalverstärkern, k ≥ d; Leistungsverstärkermittel und eine zweite Mehrzahl **p** von Kanalfiltern OMUX, die die durch die Mehrzahl **k** von Kanalverstärkern und die Leistungsverstärkermittel verstärkten Signale filtern, umfasst, wobei die **k** Kanalverstärker mit den **p** Kanalfiltern über Redundanzmittel gekoppelt sind, um **d** Verstärker den **d** Kanälen zuzuweisen; wobei die Frequenzumsetzungsmittel mindestens einen Mischer und mindestens eine Quelle für ein Umsetzungsfrequenzssignal umfassen, **dadurch gekennzeichnet, dass** die Frequenzumsetzungsmittel mindestens einen Schalter und mindestens eine Signalquelle, die **q** Signale mit **q** verschiedenen Umsetzungsfrequenzen liefert, umfassen, wobei der Schalter mit der/den Quelle(n) und dem Mischer gekoppelt ist, um eine Umsetzungsfrequenz unter den **q** Frequenzen auszuwählen und sie dem Mischer zu liefern, und dass der mindestens eine Mischer ein Breitbandmischer ist, der in der Lage ist, über das gesamte Zuweisungsband der Nutzlast, d.h. über eine Bandbreite ≥ **d**δ, korrekt zu arbeiten.

2. Nutzlast für einen Satelliten mit **d** transparenten Kanälen nach Anspruch 1, dadurch gekennzeichnet, dass die **k** Kanalverstärker mit variabler Verstärkung jeweils **k** Frequenzumsetzungsvorrichtungen zugeordnet sind, wobei jede Umsetzungsvorrichtung mindestens einen Mischer und mindestens eine Quelle für ein Umsetzungsfrequenzsignal umfasst; wobei die **d** Ausgänge der **d** Kanalverstärker jeweils mit den **d** Eingängen der Frequenzumsetzungsvorrichtungen gekoppelt sind.

3. Nutzlast für einen Satelliten mit **d** transparenten Kanälen nach Anspruch 2, dadurch gekennzeichnet, dass die **k** Frequenzumsetzungsvorrichtungen mindestens einen ersten und einen zweiten Mischer und mindestens zwei Quellen für zwei Umsetzungsfrequenzsignale umfassen, um mindestens zwei Frequenzumsetzungen für jeden Kanal auszuführen.

4. Nutzlast für einen Satelliten mit **d** transparenten Kanälen nach Anspruch 3, dadurch gekennzeichnet, dass die mindestens zwei Frequenzquellen korrelierte lokale Oszillatoren sind.

5. Nutzlast für einen Satelliten mit **d** transparenten Kanälen nach Anspruch 4, dadurch gekennzeichnet, dass die korrelierten lokalen Oszillatoren Frequenzsyntheseoszillatoren sind.

6. Nutzlast für einen Satelliten mit **d** transparenten Kanälen nach Anspruch 5, dadurch gekennzeichnet, dass jeder der korrelierten lokalen Frequenzsyntheseoszillatoren es ermöglicht, ein Signal mit einer unter einer Mehrzahl **c** von möglichen Frequenzen ausgewählten Frequenz zu liefern, wobei die korrelierten lokalen Frequenzsyntheseoszillatoren von der Erde aus über Fernsteuerungssignale (TC1,...TC16) steuerbar sind, wobei die Nutzlast außerdem Mittel zum Empfangen eines Steuersignals von der Erde sowie Mittel zum Anlegen des Steuersignals an den/die korrelierten lokalen Frequenzsyntheseoszillator(en) umfasst, wobei die mindestens zwei korrelierten lokalen Frequenzsyntheseoszillatoren mit der/den Quelle(n) und den Mischern gekoppelt sind, um eine erste und eine zweite Umsetzungsfrequenz unter den **c** Frequenzen auszuwählen und sie an die Mischer zu liefern.

7. Nutzlast für einen Satelliten mit **d** transparenten Kanälen nach einem der Ansprüche 3 bis 6, dadurch gekennzeichnet, dass ein akustischer Oberflächenwellenfilter (SAW1,...SAW16) zwischen den mindestens zwei Mischern und vor dem Kanalverstärker mit variabler Verstärkung angeordnet ist, um die Kanalfilterung durch die Filter SAW vor dem zweiten Mischer auszuführen.

8. Nutzlast für einen Telekommunikationssatelliten, der eine große Anzahl **d** von transparenten Kanälen transportieren kann, wobei die Nutzlast dazu in der Lage ist, aus Funkwellen bestehende Signale in Aufwärtsrichtung in einem ersten Frequenzband, das eine erste Mittenfrequenz und eine erste Bandbreite hat, zu empfangen und aus Funkwellen bestehende Signale in Abwärtsrichtung in einem zweiten Frequenzband zu senden, das eine zweite Mittenfrequenz und eine zweite Bandbreite hat , wobei die zweite Mittenfrequenz von der ersten Mittenfrequenz verschieden ist, wobei die Nutzlast umfasst:
mindestens eine Funkantenne, wobei die mindestens eine Funkantenne dazu in der Lage ist Funkwellen zu empfangen und/oder zu senden;
eine Mehrzahl **e** von Eingangsfiltern,
eine Mehrzahl **f** von rauscharmen Verstärkern,
eine Mehrzahl **g** von Demultiplexfiltern IMUX,
eine Mehrzahl **h** von Frequenzwandlern,
eine Mehrzahl **j** von lokalen Oszillatoren,
eine Mehrzahl **k** von Kanalverstärkern,
eine Mehrzahl **m** von Rauschreduzierungsfiltern,
eine Mehrzahl **n** von Leistungsverstärkern,
eine Mehrzahl **p** von Filtern OMUX, und
Mittel zur Kopplung und Führung der Signale;
wobei die verschiedenen oben aufgezählten Elemente angeordnet und durch die Mittel zur Kopplung und Führung der Signale verbunden sind, um eine Kanalfilterung der Signale durch die **g** Filter IMUX zu verwirklichen, bevor eine erste Frequenzumsetzung der Signale mittels der **h** Frequenzumsetzer durchgeführt wird, wobei die Anzahl **h** der Frequenzumsetzer mindestens gleich der Anzahl **d** der Kanäle ist: h ≥ d, dadurch gekennzeichnet, dass die Frequenzumsetzer mindestens einen Schalter und mindestens eine Signalquelle umfassen, die **q** Signale mit **q** verschiedenen Umsetzungsfrequenzen liefert, wobei der Schalter mit der/den Quellen und dem Mischer gekoppelt ist, um eine Umsetzungsfrequenz unter den **q** Frequenzen auszuwählen und sie an den Umsetzer zu liefern, und
dadurch gekennzeichnet, dass die Frequenzumsetzer Breitbandumsetzer sind, die jeden beliebigen Kanal von jeder beliebigen Kanalfrequenz in dem ersten Frequenzband zu jeder beliebigen Kanalfrequenz in dem zweiten Frequenzband frequenzumsetzen können durch Anlegen einer geeigneten Umsetzungsfrequenz an den Umsetzer, die von einem der lokalen Oszillatoren auf das Anlegen eines geeigneten Befehls an den dem lokalen Oszillator zugeordneten Schalter hin geliefert wird.

9. Nutzlast für einen Telekommunikationssatelliten, der eine große Anzahl **d** von transparenten Kanälen transportieren kann, nach einem der Ansprüche 1 bis 2, 7 oder 8, dadurch gekennzeichnet, dass jeder lokale Oszillator eine Mehrzahl **q** von Umsetzungsfrequenzen liefern kann, von denen eine mit Hilfe eine Schalters, der jedem lokalen Oszillator zugeordnet ist, ausgewählt werden kann, wobei der Schalter auf Befehl konfigurierbar ist.

10. Nutzlast für einen Satelliten mit **d** transparenten Kanälen nach einem der Ansprüche 1 bis 2, 7 bis 9, dadurch gekennzeichnet, dass die Nutzlast außerdem Mittel zum Empfangen eines Steuersignals von der Erde aus sowie Mittel zum Anlegen des Steuersignals an den/die Schalter, um die Konfiguration des/der letzteren zu steuern, umfasst.

11. Nutzlast für einen Satelliten mit **d** transparenten Kanälen nach einem der Ansprüche 1 bis 10, dadurch gekennzeichnet, dass die **k** Kanalverstärker physikalisch den **h** Frequenzumsetzern zugeordnet sind, wobei **h = k** ist.

12. Nutzlast für einen Satelliten mit **d** transparenten Kanälen nach Anspruch 11, dadurch gekennzeichnet, dass die **k** Verstärker und die **h = k** Frequenzumsetzer in MMIC ausgeführt sind und innerhalb einer Kanalverstärker/Frequenzwandlervorrichtung integriert sind.

13. Nutzlast für einen Satelliten mit **d** transparenten Kanälen nach einem der Ansprüche 1 bis 12, dadurch gekennzeichnet, dass die **k** Kanalverstärker Verstärker mit steuerbarer Verstärkung sind.

14. Nutzlast für einen Satelliten mit **d** transparenten Kanälen nach Anspruch 13, dadurch gekennzeichnet, dass die **k** Verstärker mit steuerbarer Verstärkung angeordnet und durch die Mittel zur Kopplung und Führung der Signale mit den Eingängen der **h** Frequenzumsetzer verbunden sind, um die Kanalverstärkung auszuführen, bevor die erste Frequenzumsetzung ausgeführt wird.

15. Nutzlast für einen Satelliten mit **d** transparenten Kanälen nach einem der Ansprüche 1 bis 16, dadurch gekennzeichnet, dass, die Nutzlast außerdem Mittel zur digitalen Signalverarbeitung umfasst, die insbesondere eine Mehrzahl **r** an Analog-Digital-Wandlern, Mittel zur digitalen Filterung und eine Mehrzahl **r** von Digital-Analog-Wandlern umfassen.

16. Nutzlast für einen Satelliten mit **d** transparenten Kanälen nach Anspruch 15, dadurch gekennzeichnet, dass die Mittel zur digitalen Verarbeitung angeordnet und durch die Mittel zur Kopplung und Signalführung verbunden sind, um die digitale Verarbeitung nach der ersten Frequenzumsetzung auszuführen.

17. Nutzlast für einen Satelliten mit **d** transparenten Kanälen nach einem beliebigen der Ansprüche 1 bis 16, dadurch gekennzeichnet, dass die Mittel zur digitalen Verarbeitung außerdem Frequenzumsetzungsmittel umfassen, die in der Lage sind, eine zweite Frequenzumsetzung vor der Digital-Analog-Wandlung durch die Mehrzahl **r** von Digital-Analog-Wandlern auszuführen.

18. Nutzlast für einen Satelliten mit **d** transparenten Kanälen nach einem beliebigen der Ansprüche 1 bis 17, dadurch gekennzeichnet, dass die j lokalen Oszillatoren Frequenzsyntheseoszillatoren sind.

19. Nutzlast für einen Satelliten mit **d** transparenten Kanälen nach einem beliebigen der Ansprüche 1 bis 18, dadurch gekennzeichnet, dass die verschiedenen Elemente kanalweise mechanisch integriert sind, wobei jeder Kanal mindestens einen Linearisierer, einen Frequenzwandler, einen Kanalverstärker und einen Leistungsverstärker sowie die für einen guten Betrieb der Baugruppe notwendige geregelte elektrische Leistungsversorgung umfasst.
